# EUROPÄISCHE PATENTSCHRIFT

(11) **EP 0 391 093 B1**
(45) Veröffentlichungstag und Bekanntmachung des Hinweises auf die Patenterteilung: **27.01.1993**
(21) Anmeldenummer: 90104636.7
(22) Anmeldetag: 12.03.1990
(51) Int. Cl.: A01B 73/02, A01D 78/10

(54) **Landwirtschaftliche Arbeitsmaschine**
Agricultural machine
Machine agricole

(30) Priorität: 07.04.1989 DE 3911296
(43) Veröffentlichungstag der Anmeldung: 10.10.1990
(73) Patentinhaber: CLAAS SAULGAU GMBH, D-88340 Saulgau (DE)
(72) Erfinder: Deni, Franz, D-7968 Saulgau-Bogenweiler (DE)

(56) Entgegenhaltungen:
- EP-A- 0 165 638
- EP-A- 0 291 812
- DE-U- 8 709 233
- US-A- 3 522 860

## Beschreibung

Die Erfindung bezieht sich auf eine landwirtschaftliche Arbeitsmaschine, besonders einen Kreiselheuer, nach dem Oberbegriff des Anspruches 1.

Aus arbeitswirtschaftlichen Gründen wird angestrebt, die Arbeitsbreite solcher Maschinen möglichst breit zu machen, ohne die Transportbreite über ein zulässiges Maß zu vergrößern. In der US-PS 38 44 358 ist gezeigt, wie eine mehrgliedrige Arbeitsmaschine zum Transport auf eine relativ kleine Breite gebracht werden kann. Die damit erzielbare Transportbreite ist für Kreiselheuer mit mehr als 6 Arbeitswerkzeugen aber immer noch weitaus breiter, als z. B. nach der deutschen Straßenverkehrsordnung zulässig ist. Andere Lösungen sind in der EP-OS 016 56 38, der DE-OS 38 16 123 und der deutschen Gebrauchsmusterschrift 87 09 233 aufgezeigt. Aus fahrmechanischen Gründen lassen sich diese Ausführungen aber nur bis zu Maschinen mit sechs Arbeitswerkzeugen verwirklichen. Kreiselheuer mit mehr als sechs Arbeitswerkzeugen sind schon aus der US-PS 35 22 860 bekannt. Bei diesen Ausführungen ist jedoch die Umstellung der Maschinen von einer Arbeits- in eine Transportstellung und umgekehrt sehr umständlich und erfordert von der bedienenden Person viel Kraft- und Zeitaufwand. Die Aufgabe, einen Kreiselheuer mit mehr als sechs Arbeitswerkzeugen zu bauen, dessen Transportbreite innerhalb der zulässigen Grenzen liegt und dessen Schwerpunkt in Transportstellung sowohl nach der Höhe, als auch nach seiner Lage in bezug auf die unterstützenden Laufräder günstig liegt, läßt sich nach der Lehre des Anspruches 1 lösen. Ein weiteres Problem kann erfindungsgemäß gelöst werden, nämlich Schutzvorrichtungen entsprechend den Ansprüchen 3 und 4 vorzusehen, die gefährliche Bauteile sowohl bei der Arbeit, als auch beim Straßentransport ausreichend absichern, und das, ohne daß zusätzliche Verstellungen durch eine Person nötig wären.

Die Erfindung wird beispielsweise anhand von drei Abbildungen erläutert:
Fig. 1 zeigt einen Kreiselheuer mit 8 Arbeitswerkzeugen in Arbeitsstellung in Draufsicht.
Fig. 2 zeigt den gleichen Gegenstand in Transportstellung in Seitenansicht und

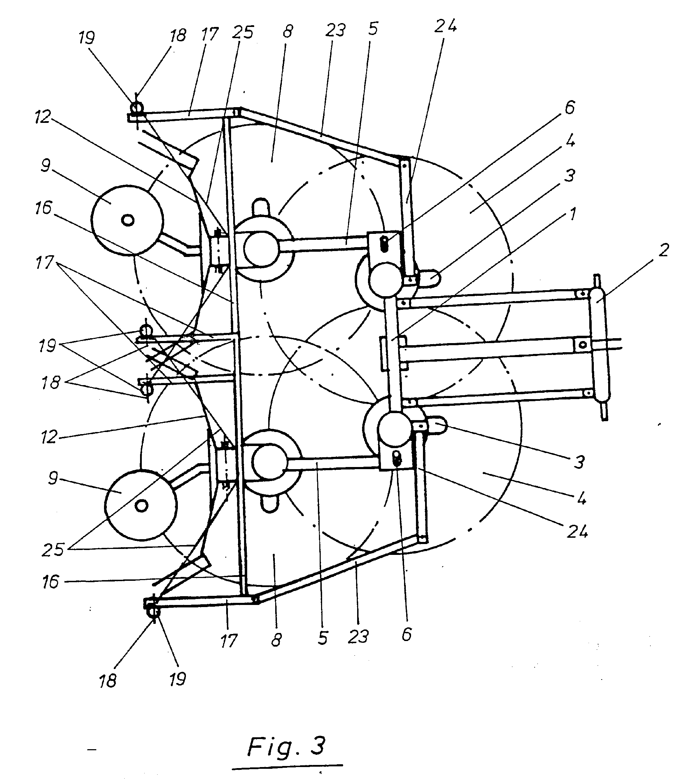

Fig. 3 den gleichen Gegenstand in Draufsicht.

Der Hauptrahmen (1) eines Kreiselheuers wird mit einem an ihn angelenkten Anbaubock (2) mit dem nicht dargestellten Dreipunktgestänge eines Schleppers verbunden. Der Hauptrahmen (1) wird von zwei Laufrädern (3) abgestützt und trägt zwei drehbar an ihm gelagerte Arbeitswerkzeuge (4).

Mit dem Hauptrahmen (1) sind innere Hilfsrahmen (5) verbunden, die um eine senkrechte Schwenkachse (6) schwenk- und feststellbar und um eine waagrechte Schwenkachse (7) schwenkbar angelenkt sind. Die inneren Hilfsrahmen (5) tragen je ein Arbeitswerkzeug (8) und stützen sich über Nachlaufräder (9) auf den Boden ab.

Mit den inneren Hilfsrahmen (5) sind mittlere Hilfsrahmen (10) um waagrechte Schwenkachsen (11) drehbar verbunden. Sie tragen Arbeitswerkzeuge (12) und stützen sich im Betrieb auf Nachlaufräder (9) ab.

Mittels waagrechter Schwenkachsen (13) sind äußere Hilfsrahmen (14) mit den mittleren Hilfsrahmen (10) drehbar verbunden. Die äußeren Hilfsrahmen (14) besitzen Nachlaufräder (9) und tragen Arbeitswerkzeuge (15).

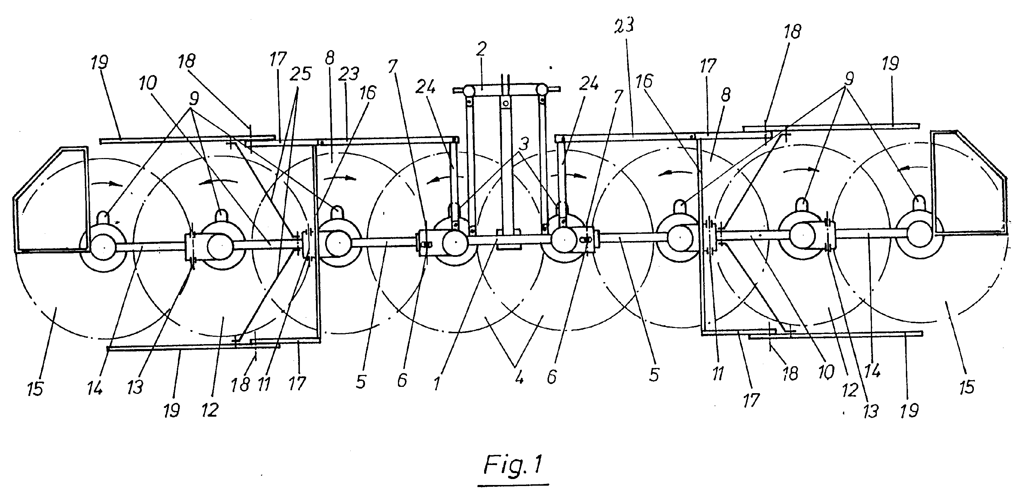

Mit den inneren Hilfsrahmen (5) sind Schutzbügel (16) fest verbunden. Deren freie Schenkel (17) dienen einerseits als Teil einer Schutzvorrichtung und andererseits als Lager für um waagrechte Drehbolzen (18) schwenkbare Schutzstangen (19). Die Schutzstangen (19) sind mittels Koppelstangen (25) derart mit den mittleren Hilfsrahmen (10) verbunden, daß sie eine etwa senkrechte Lage einnehmen, wenn die mittleren und äußeren Hilfsrahmen (10, 14) in eine Transportstellung verbracht werden. Mit dem Schutzbügel (16) ist eine vordere Schutzstange (23) gelenkig verbunden, die ihrerseits mit einer Koppelstange (24) mit dem Hauptrahmen (1) gelenkig verbunden ist. In der Arbeitsstellung (Fig. 1) bilden die Schutzstangen (19), die freien Schenkel (17) und die vorderen Schutzstangen (23) einen durchgehenden vorderen Schutz und die Schutzstangen (19) und die freien Schenkel (17) einen hinteren Schutz. In der Transportstellung bilden die vor deren Schutzstangen (23) und die freien Schenkel (17) einen seitlichen Schutz und die Schutzstangen (19) einen rückwärtigen Schutz.

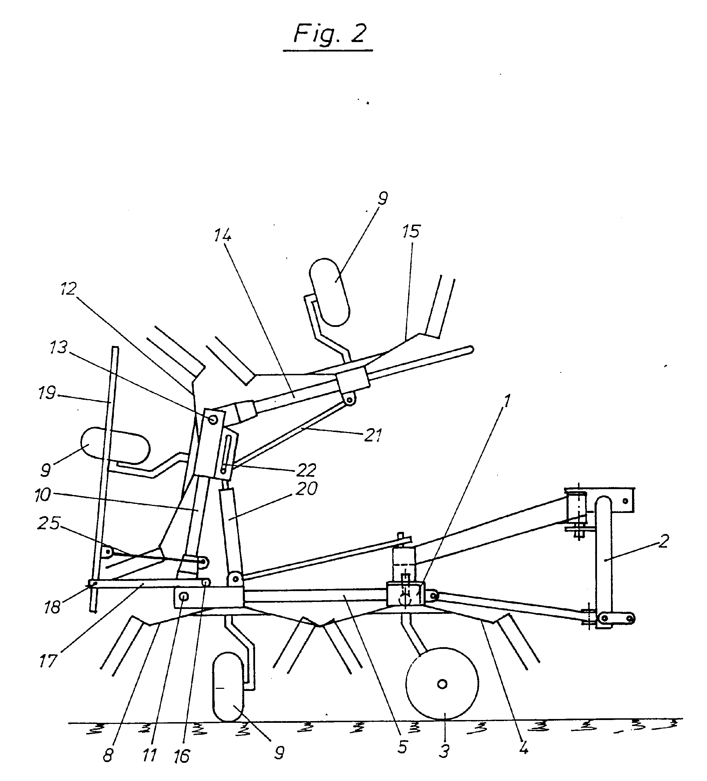

Mittels eines hydraulischen Hubzylinders (20), einer Verbindungsstange (21) und einer Kulissenführung (22) (Fig. 2) können die mittleren bzw. äußeren Hilfsrahmen (10, 14) aus der Arbeitsstellung in eine Transportstellung verbracht werden. Dabei ist es unerheblich, ob in dieser Stellung die mittleren Hilfsrahmen (10) senkrecht oder leicht geneigt sind und ob die äußeren Hilfsrahmen (14) waagrecht oder nach oben oder unten geneigt sind, weil sich die Schwerpunktlagen dadurch bedarfsgerecht einrichten lassen. Damit kann erreicht werden, daß die Laufräder (3) und die Nachlaufräder (9) in der Transportstellung möglichst gleich belastet werden.

## Patentansprüche

1. Landwirtschaftliche Arbeitsmaschine, besonders Kreiselheuer mit einem Hauptrahmen (1) und mehreren Hilfsrahmen (5, 10, 14) und mehr als sechs quer zur Fahrtrichtung nebeneinander angeordneten Arbeitswerkzeugen (4), deren Rahmenteile durch in Fahrtrichtung liegende Schwenkachsen (7, 11, 13) sowie die inneren Hilfsrahmen (5) mit dem Hauptrahmen (1) zusätzlich um nach oben gerichtete Schwenkachsen (6) gelenkig miteinander verbunden sind und die sich mittels Laufrädern (3) oder dergleichen gegen den Erdboden abstützen, sowie mit stangenartigen Schutzvorrichtungen (19, 17, 23) für die Arbeitswerkzeuge (4), wobei in der Transportstellung die beiden inneren Hilfsrahmen (5) etwa in Fahrtrichtung gerichtet und die äußeren Hilfsrahmen (10, 14) oberhalb dieser angeordnet sind, dadurch gekennzeichnet, daß zur Erreichung einer Transportstellung die inneren Hilfsrahmen (5) um die nach oben gerichteten Schwenkachse (6) gegenüber dem Hauptrahmen (1) nach hinten, die mittleren Hilfsrahmen (10) um etwa waagrechte Achsen (11) gegenüber den inneren Hilfsrahmen (5) etwa senkrecht nach oben und die äußeren Hilfsrahmen (14) ebenfalls um eine etwa waagrechte Achse (13) gegenüber den mittleren Hilfsrahmen (10) nach vorne in eine Lage verschwenkt werden, in der sie oberhalb der inneren Hilfsrahmen (5) liegen.

2. Landwirtschaftliche Arbeitsmaschine nach Anspruch 1, dadurch gekennzeichnet, daß die Verschwenkung der mittleren und der äußeren Hilfsrahmen (10, 14) durch an sich bekannte hydraulische Stellglieder (20, 21, 22) bewirkt wird.

3. Landwirtschaftliche Arbeitsmaschine nach den Ansprüchen 1 und 2, dadurch gekennzeichnet, daß die stangenförmigen Schutzvorrichtungen (19, 17, 23) die Arbeitswerkzeuge (4, 8, 12, 15) in der Arbeitsstellung von vorne und von hinten und in der Transportstellung von der Seite und von hinten mindestens teilweise abdecken.

4. Landwirtschaftliche Arbeitsmaschine nach Anspruch 3, dadurch gekennzeichnet, daß die Schutzvorrichtungen aus fest mit den inneren Hilfsrahmen (5) verbundenen Bügeln (16, 17) und damit gelenkig verbundenen Schutzstangen (19, 23) bestehen, die ihrerseits über Koppelstangen (24, 25) gelenkig mit dem Hauptrahmen (1) bzw, mit dem Hilfsrahmen (10) verbunden sind.

## Claims

1. An agricultural implement, in particular a rotary haymaking machine, comprising a main frame (1) and a plurality of auxiliary frames (5, 10, 14) and more than six working tools (4) which are arranged in side-by-side relationship transversely to the direction of travel and the frame members of which are pivotally connected together by pivot axes (7, 11, 13) disposed in the direction of travel and the inner auxiliary frames (5) are additionally pivotally connected to the main frame (1) about upwardly directed pivot axes (6), the working tools being supported against the ground by means of support wheels (3) or the like, and comprising bar-like protection devices (.19, 17, 23) for the working tools (4), wherein in the transportation position the two inner auxiliary frames (5) are directed approximately in the direction of travel and the outer auxiliary frames (10, 14) are arranged above same, characterised in that to reach a transportation position the inner auxiliary frames (5) are pivoted rearwardly about the upwardly directed pivot axis (6) relative to the main frame (1), the middle auxiliary frames (10) are pivoted approximately vertically upwardly about approximately horizontal axes (11) relative to the inner auxiliary frames (5) and the outer auxiliary frames (14) are also pivoted forwardly about an approximately horizontal axis (13) relative to the middle auxiliary frames (10) into a position in which they lie above the inner auxiliary frames (5).

2. An agricultural implement according to claim 1 characterised in that the pivotal movement of the middle and the outer auxiliary frames (10, 14) is produced by per se known hydraulic control members (20, 21, 22).

3. An agricultural implement according to claims 1 and 2 characterised in that the bar-shaped protection devices (19, 17, 23) at least partially cover the working tools (4, 8, 12, 15) from the front and from the rear in the working position and from the side and from the rear in the transportation position.

4. An agricultural implement according to claim 3 characterised in that the protection devices comprise brackets (16, 17) which are fixedly connected to the inner auxiliary frames (5), and protective bars (19, 23) which are pivotally connected thereto and which in turn are pivotally connected by way of coupling bars (24, 25) to the main frame (1) and to the auxiliary frame (10) respectively.

## Revendications

1. Machine agricole, notamment machine de fenaison à toupies comprenant un châssis principal (1) et plusieurs châssis auxiliaires (5, 10, 14) et plus de six outils de travail (4) disposés les uns à côté des autres transversalement à la direction de la marche, dont les châssis sont reliés les uns aux autres de façon articulée par des axes de pivotement (7, 11, 13) orientés dans la direction de la marche, et dont les châssis auxiliaires internes (5) sont reliés additionnellement au châssis principal (1) par des axes de pivotement (6) orientés vers le haut, et s'appuient par des roues (3) ou analogues sur le sol, ainsi que des dispositifs de protection en forme de tiges (19, 17, 23) pour les outils de travail (4), les deux châssis auxiliaires internes (5) étant, dans la position de transport, orientés sensiblement dans le sens de la marche et les châssis auxiliaires externes (10, 14) étant disposés au-dessus de ceux-ci, caractérisée en ce que pour obtenir une position de transport, les châssis auxiliaires internes (5) sont pivotés vers l'arrière par rapport au châssis principal (1) autour d'axes de pivotement (6) orientés vers le haut, les châssis auxiliaires médians (10) sont pivotés par rapport aux châssis auxiliaires internes (5) sensiblement verticalement vers le haut autour d'axes sensiblement horizontaux (11), et les châssis auxiliaires externes (14) sont également pivotés par rapport aux châssis médians (10) vers l'avant autour d'un axe sensiblement horizontal (13), position dans laquelle ils sont situés au-dessus des châssis auxiliaires internes (5).

2. Machine agricole selon la revendication 1, caractérisée en ce que le pivotement des châssis auxiliaires médians et externes (10, 14) est déterminé par des organes de réglage hydrauliques connus en soi (20, 21, 22).

3. Machine agricole selon les revendications 1 et 2, caractérisée en ce que les dispositifs de protection en forme de tiges (19, 17, 23) recouvrent au moins partiellement les outils de travail (4, 8, 12, 15) dans la position de travail par l'avant et par l'arrière, et dans la position de transport par le côté et par l'arrière.

4. Machine agricole selon la revendication 3, caractérisée en ce que les dispositifs de protection sont constitués par des étriers (16, 17) solidaires des châssis auxiliaires internes (5) et par des tiges de protection (19, 23) qui leur sont reliées de façon articulée, tiges qui sont reliées de leur côté de façon articulée par des tiges d'accouplement (24, 25) au châssis principal (1) ou au châssis auxiliaire (10).
